(19) **Europäisches Patentamt / European Patent Office / Office européen des brevets**

(11) **EP 2 761 795 B1**

(12) # EUROPEAN PATENT SPECIFICATION

(45) Date of publication and mention
of the grant of the patent:
**17.10.2018 Bulletin 2018/42**

(51) Int Cl.:
***H04J 3/06*** *(2006.01)*

(21) Application number: **12765980.3**

(22) Date of filing: **06.09.2012**

(86) International application number:
**PCT/AT2012/050131**

(87) International publication number:
**WO 2013/044282 (04.04.2013 Gazette 2013/14)**

(54) **METHOD FOR DIAGNOSIS OF FAILURES IN A NETWORK**

VERFAHREN ZUR DIAGNOSE VON FEHLERN IN EINEM NETZWERK

PROCÉDÉ DE DIAGNOSTIC DE DÉFAILLANCES DANS UN RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 AT 14192011**

(43) Date of publication of application:
**06.08.2014 Bulletin 2014/32**

(73) Proprietor: **TTTech Computertechnik AG 1040 Wien (AT)**

(72) Inventors:
  • **STEINER, Wilfried**
    **A-2225 Zistersdorf (AT)**
  • **BAUER, Günther**
    **A-1010 Wien (AT)**

(74) Representative: **Patentanwaltskanzlei Matschnig & Forsthuber OG Biberstraße 22 Postfach 36 1010 Wien (AT)**

(56) References cited:
    **EP-A1- 1 280 024     US-A1- 2008 089 363**

• **"Automated formal verification of the ttethernet synchronization quality"; "III" In: W. STEINER; B. DUTERTRE: "NASA Formal Methods, ser. Lecture Notes in Computer Science", April 2011 (2011-04), SPRINGER, XP002688664, ISBN: 978-3-642-20397-8 vol. 6617, pages 375-390, DOI: 10.1007/978-3-642-20398-5_27, cited in the application Abstract 2 TTEthernet Clock Synchronization Algorithm 2.1 Clock Synchronization Overview 2.2 First Step Convergence: Compression Master (CM) 2.3 Second Step Convergence: Synchronization Master (SM) 2.4 Clock Synchronization Example**
• **MARCO SERAFINI ET AL: "Application-Level Diagnostic and Membership Protocols for Generic Time-Triggered Systems", IEEE TRANSACTIONS ON DEPENDABLE AND SECURE COMPUTING, IEEE SERVICE CENTER, NEW YORK, NY, US, vol. 8, no. 2, 1 March 2011 (2011-03-01), pages 177-193, XP011342508, ISSN: 1545-5971, DOI: 10.1109/TDSC.2010.23**

- Hermann Kopetz: "Real-Time Systems. Design Principles for Distributed Embedded Applications Second Edition", Real-Time System Series, January 2011 (2011-01), pages 66-73, XP002688665, Springer Science+Business Media ISSN: 1867-321X, DOI: 10.1007/978-1-4419-8237-7 ISBN: 978-1-4419-8236-0 Retrieved from the Internet: URL:https://vowi.fsinf.at/images/temp/2/2c/20110606133809!TU_Wien-Echtzeitsysteme_VO_%28Kopetz%29_-_TU_Wien-Echtzeitsysteme_VO_%28Kopetz%29_-_TU_Wien-Echtzeitsysteme_VO_%28Kopetz%29_-_Real_Time_Systems_-_Design_Principles_for_Distributed_Embedded_Applications_--_Hermann_Kopetz_--_2._Edition.pd f [retrieved on 2012-12-03]
- GE Fanuc Intelligent Platforms. Information Centers: "TTEthernet - A Powerful NetworkSolution for AdvancedIntegrated Systems", , 11 August 2009 (2009-08-11), XP002688666, GE Fanuc Intelligent Platforms Retrieved from the Internet: URL:http://www.ge-ip.com/userfiles/file/TT Net%20WP_gft751.pdf [retrieved on 2012-12-03]
- Astrit Ademaj, Hermann Kopetz, Petr Grillinger, Klaus Steinhammer, Alexander Hanzlik: "Fault-Tolerant Time-Triggered Ethernet Configuration with Star Topology", , 20 August 2010 (2010-08-20), XP002688667, www.vmars.tuwien.ac.at Retrieved from the Internet: URL:http://www.sciweavers.org/publications/fault-tolerant-time-triggered-ethernet-co nfiguration-star-topology [retrieved on 2012-12-03]

**Description**

The invention relates to a method for diagnosis of failures in a network.

The work leading to this invention has received funding from the European Community's Seventh Framework Programme FP7/2007-2013 under grant agreement n° 236701.

The TTEthernet clock synchronization algorithm is inherently fault-tolerant. However, the synchronization quality decreases with the number of faulty components and the severity of their failure modes. The diagnosis algorithm presented in this invention aims to detect faulty TTEthernet devices, in particular faulty CMs, and remove them from the TTEthernet clock synchronization algorithm. By doing so, the failure mode of a faulty CM is transformed from an inconsistent-omission failure mode to a fail silent failure mode and we can formally verify that the diagnosis algorithm improves the precision in the system.

The diagnosis algorithm is executed in the SMs immediately after the clocks are corrected according the native TTEthernet clock synchronization algorithm. It starts with each SM recording those CMs from which they receive PCFs using an array active$[]$ of boolean variables. In case that the clock of CM j is not absent (hence, the SM received a PCF from CM j) the respective active[j] will be set to TRUE. An SM i checks then for each CM j whether it has been active before, but it did not receive a PCF in the current integration cycle. If this is the case, SM i accuses CM j to be omission faulty. For simplicity, we assume that this accusation information is stored in a local accusation matrix accused[i][j], indexed by the SMs and CMs. Furthermore, SM i informs all other SMs of its accusation by sending and accusation message ACi, where ACi:accused is a vector of boolean variables with each boolean representing a unique CM. SM i will set ACi:accused [j] if it accuses CM j. Again, for simplicity, we assume that the ACi messages are sent as rate-constrained traffic on all redundant channels in a TTEthernet system. By the TTEthernet network it is, thus, ensured that the ACi messages are delivered with a known upper bound in time and are transported over at least one non-faulty channel. We furthermore, assume that the exchange of the accusation information happens sufficiently prior to the next execution of the TTEthernet clock synchronization algorithm.

Algorithm 5 is executed by an SM i that receives an accusation message ACk from an SM k: when a boolean variable in ACk:accused [j] is TRUE, SM i sets the corresponding local accused [k][j] to TRUE as well. Each SM, thus, uses the matrix accused to locally store all accusations from all SMs. Once an SM k accuses a CM or receives sufficient accusations for a CM, it will stop using the PCFs from this CM. Hence, the selection function presented in Algorithm 2 will also take the accused matrix into account when returning the set of CM clock such that all CM clock [j] will be excluded that are accused by a sufficiently high number, z, of SMs.

The diagnosis algorithm implements a simple version of an accusation protocol as used in NASA's SPIDER protocol [5]. TTEthernet devices that detect inconsistencies in the TTEthernet clock synchronization protocol report these inconsistencies to all devices in the system. Once a sufficiently high number of devices has accused a particular device of being faulty, this device is excluded from the clock synchronization protocol. Using our formal framework, we can automatically prove the resulting quality improvement of the precision in the system. Serafini et al. [6] introduce application-level diagnosis algorithms, for which they discuss an implementation and provide formal correctness proofs. Besides some algorithmic difference, from the point of view of formal verification Serafini et al. prove their algorithms in a discrete time model and abstract from the underlying synchronization protocol, while our framework allows the integrated proof of the clock synchronization protocol together with diagnosis in a continuous time model.

In detail, the invention relates to a method for diagnosis of failures in a network, wherein the network comprises nodes, each node having a local clock, and wherein the nodes are connected to each other in an arbitrary network topology, and wherein a two-step clock synchronization algorithm is realized in the network, the two-step clock synchronization algorithm comprises

-) a first step, in which all nodes of a first subset of nodes (SM) are providing their local clock state (SM_clock) via messages to the network and wherein all nodes of a second subset of nodes (CM) are receiving these messages, and wherein the nodes of the second subset of nodes (CM) are performing a first convergence function on the local clock readings, and

-) a second step, in which the nodes of the second set of nodes (CM) transmit the result (CM_clock) of the calculation of the convergence function of the first step to the network in form of messages,

and wherein nodes of a first subset of nodes (SM) and/or other nodes (SC) in the system that receive this messages from the second subset of nodes (CM) apply a second convergence function based on the timing information associated with these messages, and

wherein nodes which are receiving messages from the second subset of nodes (CM) use the timing information associated with at least a subset of these messages to correct their local clocks, and

wherein at least one first node from the first subset of nodes (SM) stops using messages from a specific second node of the second subset of nodes (CM) when said at least one first node classifies said specific second node as faulty.

It is of advantage, that a first node of a first subset of nodes (SM) classifies a specific second node of a second subset of nodes (CM) as faulty when the classifying first node has received messages from said specific second node since the power-on of classifying first node, but has stopped receiving messages from said specific second node for a configurable duration.

Further, it is of advantage that said classifying first node sends a classifying message to all other nodes of the first subset (SM) of nodes when it classifies a specific second node as faulty, thereby informing the first subset of nodes (SM) of the decision of the first node that the second node is faulty.

Preferably, a classifying first node periodically re-sends said classifying message.

Furthermore, it can be provided that a first node from the first subset of nodes (SM) classifies a specific second node from the second subset of nodes (CM) as faulty, when said first node from the first subset of nodes (SM) receives messages from a configurable number of nodes from the first subset of nodes (SM), which messages indicate that said specific second node of the second subset of nodes (CM) is faulty.

Also, it can be provided that a first node of the first subset of nodes (SM) stops classifying a specific second node from the second subset of nodes (CM) as faulty after a configurable duration, thereby, again accepting and using the messages from said specific second node.

It may be of advantage that a first node of the first subset of nodes (SM) stops classifying a second node from the second subset of nodes (CM) as faulty when it is instructed by messages from a configurable number of other nodes in the system of doing so, thereby, again accepting and using the messages from said second node.

The invention also relates to a network for carrying out a method described above, wherein the network consists of nodes, each node having a local clock, wherein the nodes are connected to each other in an arbitrary network topology, wherein preferably each node is either an end system or a switch.

It is of advantage when the network comprises multiple tree connections, wherein each tree is formed of a disjoint subset of switches, and wherein a subset of end systems is connected to exactly one switch of each tree of the set of redundant trees.

Preferably, the subset of nodes that send messages in the first step of the two-step clock synchronization approach is a subset of the end systems.

It may aslo be of advantage when the subset of nodes that perform the first convergence function is a subset of the switches in the network.

Furthermore, it may be of advantage in network or a method described above that the end systems use the diagnosis information of TTEthernet as specified in the AS6802 standard to keep track on the succeeding clock correction.

Also, it may be of advantage that the clock rate of the local clock in each node can be changed only up to a preconfigured maximum.

Further details will be explained in the following:

Layered Diagnosis and Clock-Rate Correction for the TTEthernet Clock Synchronization Protocol

Abstract

Fault-tolerant clock synchronization is the foundation of synchronous architectures such as the Time-Triggered Architecture (TTA) for dependable cyber-physical systems. Clocks are typically local counters that are increased with a given rate according to real time, and clock synchronization algorithms ensure that any two clocks in the system read about the same value at about the same point in real time. This is achieved by a clock synchronization algorithm that changes the current values of the clocks, the clocks' rate, or both.

This paper presents a diagnosis algorithm and a clock-rate correction algorithm as layered services on top of the TTEthernet clock synchronization algorithm, which itself is a clock-state correction algorithm. We analyze the algorithms' properties and explore and understand their behavior using a bounded model checker for infinite data types.

We use our formal framework for both simulation and formal proof. To the best knowledge of the authors this has been the first time that formal methods, should they be theorem provers or model checkers, have been applied to the problem of rate-correction for fault-tolerant clock synchronization. Furthermore, the formal development process itself demonstrates how efficiently pre-existing models can be utilized in the development of new algorithms and their formal verification.

**Keywords:** TTEthernet, fault tolerance, clock synchronization, formal verification, model-based design

**1 Introduction**

Dependable systems are omnipresent in our daily lives, and are becoming increasingly large and complex. As a consequence of this trend it is apparent that the correct development of such complex systems requires a sound architectural basis. In the absence of architectures we will either build systems of insufficient quality or will simply not be able to build systems beyond a certain level of complexity at all. The time-triggered architecture (TTA) [1] as developed at the Institut für Technische Informatik at the Vienna University of Technology is an extraordinary example of an architecture for dependable embedded systems. The TTA tremendously simplifies the development of dependable cyber-physical systems. It has been successfully applied in industries that demand a high level of determinism such as the avionics industry, in which predictability of system operation is a key property. TTP [2] and TTEthernet [3] are implementations of the TTA. TTP is applied, for example, in the new Boeing 787 Dreamliner, whereas TTEthernet has been selected for the NASA Orion Space Program. While the aerospace and space industries (as well as automotive and similar industries) are traditional areas for dependable systems, we also observe emerging areas with increasing dependability requirements. Examples include surgery robots in the medical area, datacenters in the financial and other critical industries, as well as the smart grid that aims at decentralized energy production and efficient energy use. TTEthernet is currently being evaluated for several of these emerging areas.

TTEthernet integrates synchronized and unsynchronized communication on the same physical network, i.e., time-triggered frames and event-triggered frames can coexist. The synchronized, time-triggered traffic relies on synchronized local clocks in the system and, therefore, TTEthernet specifies a fault-tolerant clock synchronization algorithm. This algorithm is a clock state-correction algorithm: the TTEthernet devices periodically exchange the current values of their local clocks and correct their clock values appropriately.

We have formally verified the TTEthernet clock synchronization algorithm and reported the verification procedure and results in [4]. This has been the first time that a fault-tolerant clock synchronization algorithm has been formally verified by model checking under the assumptions of clock drift and clock failures. The presented verification method is highly automated, which not only minimizes the probability of human error in the deduction of the correctness of the algorithm, but also works as formal framework that enables the holistic design of new algorithms running on top of TTEthernet. In this paper we present two such algorithms, a diagnosis algorithm and a clock rate-correction algorithm, as well as their design process and their formal verification. The main contribution of this paper is, thus, twofold: we introduce a new method for algorithm development and, by demonstrating the method, we present two new algorithms for TTEthernet.

The diagnosis algorithm implements a simple version of an accusation protocol as used in NASA's SPIDER protocol [5]. TTEthernet devices that detect inconsistencies in the TTEthernet clock synchronization protocol report these inconsistencies to all devices in the system. Once a sufficiently high number of devices has accused a particular device of being faulty, this device is excluded from the clock synchronization protocol. Using our formal framework, we can automatically prove the resulting quality improvement of the precision in the system. Serafini et al. [6] introduce application-level diagnosis algorithms, for which they discuss an implementation and provide formal correctness proofs. Besides some algorithmic difference, from the point of view of formal verification Serafini et al. prove their algorithms in a discrete time model and abstract from the underlying synchronization protocol, while our framework allows the integrated proof of the clock synchronization protocol together with diagnosis in a continuous time model.

Clock rate-correction algorithms, or rate-correction algorithms for short, not only periodically realign the values of the clock counters, but also change the rate of their increment. E.g., a node may diagnose that it always has to correct its local clock for about $+5\mu s$. This means that the update rate of this clock's counter is too low, or in other words, the clock ticks too slowly. In this case, a rate-correction algorithm would speed-up the clock with the aim that the next correction should be less than $5\mu s$. Of course, this assumes some stability of clock drift, which we discuss later in this paper.

Probably most prominently, the FlexRay communication protocol [7] specifies a rate-correction algorithm. Although our algorithm is similar to the FlexRay rate-correction approach, there are differences with respect to the underlying assumptions on topology and the clock-state correction algorithm. A combination of clock-state correction and clock-rate correction has been introduced by Kopetz et al. in [8] and analyzed by simulation and measurement. This approach elects a particular rate master, which is then used by the other nodes to align their rate to. The drawback of such an approach is, that in case of the failure of the rate master, a re-election is necessary. Our approach does not rely on a rate master and integrates state and rate correction more tightly.

We continue in Section 2 with a review of the TTEthernet clock synchronization algorithm. In Section 3 we recapture the formal proof of this algorithm and present how its formal model is re-used in our framework for simulation and formal verification of layered algorithms. Based on this framework we have developed several new algorithms. We introduce a diagnosis algorithm in Section 4 and a clock rate-correction algorithm in Section 5. We discuss these algorithms formally and give simulation results and formal proofs using our framework. Finally, we conclude in Section 6.

Due to space limitations we do not discuss the SAL models in detail. The models can be found online[1] and will be referenced on the SAL wiki.

[1]http://www.csl.sri.com/users/bruno/sal/layered-algorithms.tar.gz

**2 TTEthernet Clock Synchronization Algorithm**

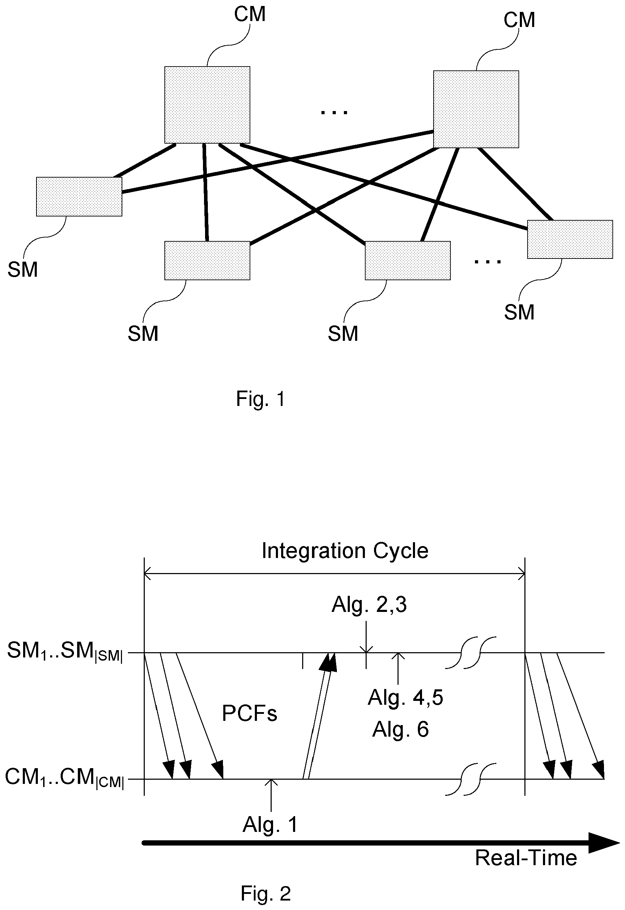

TTEthernet is an extension of the traditional Ethernet standard by services that guarantee deterministic delivery of time-critical messages. An example network with two redundant channels is depicted in Fig. 1. As depicted, a TTEthernet network consists of end systems and switches, where end systems are connected to switches with bi-directional communication links. Switches may connect to each other thereby forming multi-hop connections between end systems. Each switch belongs to one and only one channel and in its simplest form a channel is formed by a single switch and the communication links to the end systems. For fault-tolerance reasons, a TTEthernet network implements redundant channels, e.g., two redundant channels as in Fig. 1.

**2.1 Clock Synchronization Overview**

End systems and switches are physical components to which the TTEthernet clock synchronization algorithm assigns one of three "roles", synchronization master (SM), compression master (CM), or synchronization client (SC). In this paper we assume for simplicity of discussion that end systems are configured as SMs and switches as CMs. We also generally consider a network as the one depicted in Fig. 1. SMs and CMs inform each other about the current state of their local clocks by exchanging protocol control frames (PCF). We have discussed the process of how a component concludes on the current local time of a remote component via the reception of PCFs in [9] and assume in the rest of the paper that the exchange of PCFs is equivalent to exchanging the current values of the local clocks of the components.

Fig. 2 depicts the two steps in the TTEthernet clock synchronization algorithm. In the first step, the SMs send PCFs to the CMs. The CMs extract from the arrival points in time of the PCFs the current state of their local clocks and execute a first convergence function, the so-called compression function (Alg. 1). The result of the convergence function is then delivered to the SMs in form of new PCFs (the "compressed" PCFs). In the second step the SMs collect the compressed PCFs from the CMs and execute a second convergence function (Alg. 2,3). The diagnosis algorithm (Alg. 4,5) and the rate-correction algorithm (Alg. 6) analyzed in this paper are then executed only after the clocks are corrected by the TTEthernet clock synchronization algorithm.

**2.2 Failure Hypothesis**

TTEthernet assumes an inconsistent-omission failure model for the CMs. This means that a faulty CM is able to arbitrarily accept and reject PCFs from the SMs and can also decide to which SMs it sends the compressed PCF and to which not. Babbling idiot failures of the CM are excluded by the design of the CM as self-checking pair. The SMs, on the other hand, may fail arbitrarily, and in particular, they may start to babble PCFs. The design of the CMs ensures that only one PCF per SM is used per re-synchronization cycle. However, we assume that the clock values provided by a faulty SM can be arbitrary and the faulty SM may send different clock values to the different CMs. Although TTEthernet is configurable to tolerate multiple failures, we analyze and verify the new algorithms under a single failure fault-hypothesis. Hence, we assume either a faulty SM or a faulty CM, but not both at the same point in time.

**2.3 First Step Convergence: Compression Master (CM)**

The CMs collect the current states of the local clocks of the SMs. We denote these values by *SM_clock* and number them *SM_clock$_i$*, where $1 \leq i \leq |SM|$ and assume that the *SM_clock$_i$* values are sorted in increasing order. From the received *SM_clock$_i$*, a CM *j* uses a variant of the fault-tolerant median to calculate the new "compressed" clock *CM_clock* which we number with the identifier of the respective CM: *CM_clock$_j$*. Algorithm 1 defines this calculation as a function of the number of *SM_clock$_i$* values (denoted by the cardinality |*SM_clock*|) received.

The compressed clock is delivered back to the SMs in a new "compressed" PCF and the SMs are able to read the compressed clock value from the arrival point in time of the compressed PCF. This compressed PCF also contains the *pcf_membership_new* field in its payload. *pcf_membership_new* is a bitvector in which each bit is assigned to a unique SM. The CMs will set the bit of a SM, if the respective SM i has provided a local clock value *SM_clock$_i$* in the calculation of the most recent *CM_clock$_j$* and will clear the bit otherwise. The self-checking pair design of the CM guarantees

---

**Algorithm 1** Convergence Algorithm executed by CM $j$

---

1: **if** $|SM\_clock| = 1$ **then**

2:     $CM\_clock_j \leftarrow SM\_clock_1$

3: **else if** $|SM\_clock| = 2$ **then**

4:     $CM\_clock_j \leftarrow \frac{SM\_clock_1 + SM\_clock_2}{2}$

5: **else if** $|SM\_clock| = 3$ **then**

6:     $CM\_clock_j \leftarrow SM\_clock_2$

7: **else if** $|SM\_clock| = 4$ **then**

8:     $CM\_clock_j \leftarrow \frac{SM\_clock_2 + SM\_clock_3}{2}$

9: **else if** $|SM\_clock| = 5$ **then**

10:     $CM\_clock_j \leftarrow SM\_clock_3$

11: **else**

12:     average of the $(k+1)^{th}$ largest and $(k+1)^{th}$ smallest clocks, where $k$ is the number of faulty SMs to be tolerated.

13: **end if**

---

that the compressed clock *CM_clock_j* and the *pcf_membership_new* vector are consistent. Hence, the design prevents a faulty CM from setting an arbitrary number of bits in *pcf_membership_new.*

Alternatively, for the case of five SM clock values, the CM may calculate the arithmetic mean of the second and fourth SM clock value for the compressed clock value.

**2.4 Second Step Convergence: Synchronization Master (SM)**

In the second step of the clock synchronization algorithm, the SMs receive the compressed PCFs, extract the compressed clock values from them, and correct their local clocks. In the fault-free case each SM receives *exactly* one compressed PCF per CM from which it extracts the compressed clock values *CM_clock_j*, where $1 \leq j \leq |CM|$ and we assume the *CM_clock_j* values are sorted in increasing order.

In the case of a faulty CM, an SM may receive *at maximum* one compressed PCF per CM (as the faulty CM may decide not to send its compressed PCF to some SMs). Furthermore, an SM will only use a compressed PCF in its convergence function if the *pcf_membership_new* field has at least *accept_threshold* of bits set. The value of *accept_threshold* is calculated using Algorithm 2: the SM searches for the maximum bits set in any of the PCFs received from the CMs. The value of *accept_threshold* is then given by this maximum minus the configured number of tolerable faulty SMs.

The SM will discard a compressed PCF that has less than *accept_threshold* bits set in the *pcf_membership_new* field. This mechanism ensures that an SM excludes compressed PCFs that represent relatively low numbers of SM clocks. The *pcf_membership_new* vector is also used in other TTEthernet algorithms such as clique detection or startup as well as in network configurations that use more than one CM per channel. We do not discuss this functionality and configurations in this paper. For the analysis of the clock synchronization algorithm the description above is sufficient.

---

**Algorithm 2** select($CM\_clock$)

---

1: **for** $j = 1 \rightarrow |CM|$ **do**

2:     **if** $current\_max < bitsum(pcf\_membership\_new_j)$ **then**

3:         $current\_max \leftarrow bitsum(pcf\_membership\_new_j)$

4:     **end if**

5: **end for**

6: $accept\_threshold \leftarrow current\_max - conf\_faulty\_SM$

7: **return** $\{CM\_clock | \quad pcf\_memberhip\_new$
$$\geq accept\_threshold\}$$

---

Under the assumption of one CM per channel and up to three channels maximum, the convergence function is described in Algorithm 3.

---

**Algorithm 3** Convergence Algorithm executed by SM $i$

---

1: **if** $|select(CM\_clock)| = 1$ **then**
2:     $act\_corr \leftarrow SM\_clock_i - CM\_clock_1$
3:     $SM\_clock_i \leftarrow CM\_clock_1$
4: **else if** $|select(CM\_clock)| = 2$ **then**
5:     $act\_corr \leftarrow SM\_clock_i - \frac{CM\_clock_1 + CM\_clock_2}{2}$
6:     $SM\_clock_i \leftarrow \frac{CM\_clock_1 + CM\_clock_2}{2}$
7: **else**
8:     $\{|select(CM\_clock)| = 3\}$
9:     $act\_corr \leftarrow SM\_clock_i - CM\_clock_2$
10:     $SM\_clock_i \leftarrow CM\_clock_2$
11: **end if**

---

The *act_corr* value is already an extension for the rate-correction algorithm discussed in Section 5. It stores the current correction value and is updated with each integration cycle.

**2.5 Synchronization Theorem**

The maximum difference between any two local clocks $SM\_clock_i$ and $SM\_clock_j$ of non-faulty SMs, $SM_i$ and $SM_j$, is called the *precision.* The precision is bounded and known.

## Theorem 1.

$$\forall i, j \quad : \quad SM\_clock_i > SM\_clock_j \Rightarrow$$

$$SM\_clock_i - SM\_clock_j \leq precision$$

*Proof.* Theorem 1 has been proven by model checking in [4] considering a faulty SM, a faulty CM, or both a faulty SM and a faulty CM. □

**3 Proof and Simulation Framework**

Our proof and simulation framework is based on the bounded infinite-state model checker SAL (sal-inf-bmc). We build on the representation of the TTEthernet clock synchronization algorithm presented in [4]. We treat this formal model as "holistic view" in a sense that our framework does not rely on the output of these previous studies of the TTEthernet clock synchronization algorithm, but incorporates the previous models with the new algorithms.

The algorithms presented in this paper have been formalized in SAL [10] as state-transition system of the form $\langle S, I, \rightarrow \rangle$. Here, $S$ defines the set of system states $\sigma_i$, $I$ the set of initial system states with $I \subseteq S$ and $\rightarrow$ the set of transitions between system states. Each system state $\sigma$ maps the variables to particular values according to their defined variable type. Furthermore, SAL supports structured modeling such that we can define the SM and CM functionality in encapsulated modules.

SAL provides several tools (symbolic, bounded, and bounded infinite-state model checking). While we experimented with all of them, we finally use the bounded infinite-state model checker sal-inf-bmc to prove the TTEthernet synchronization quality as well as to generate testcases. With sal-inf-bmc we can treat time as a continuous entity and can use *k*-induction [11] as proof method.

**3.1 Representation of Time**

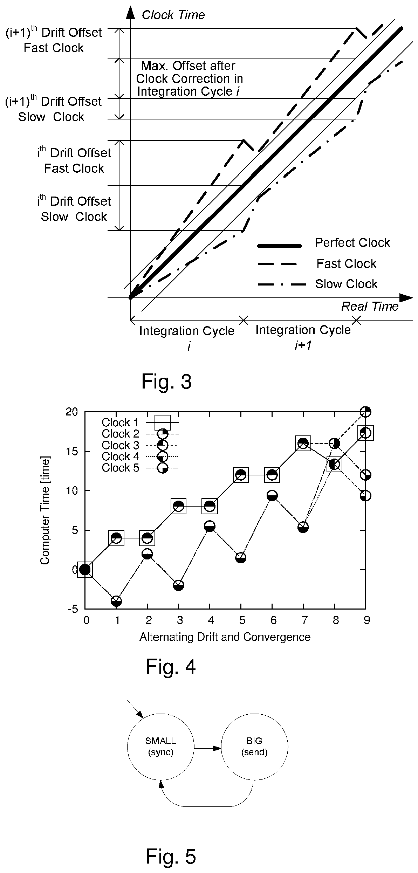

In TTEthernet, the clock synchronization algorithm is executed in rounds, called the integration cycles. Fig. 3 shows an example scenario with a fast and a slow clock.

The x-axis depicts real time and the y-axis the internal clock time of a respective TTEthernet device. The perfect clock is plotted as a forty-five degree solid line while the fast clock is depicted as a dashed line slightly above the perfect clock and the slow clock is depicted as a dotted-dashed line slightly below the perfect clock. The figure shows for each integration cycle the divergence of the fast and slow clocks from the perfect clock and their synchronization at the beginning of each integration cycle. The drift from the perfect clock is a function of the length of the integration cycle and the drift rate of the clocks. Following literature we use the $R_{sync}$ for the integration cycle and $\rho$ for the drift rate. In addition, we use a value $\Delta_{error}$ to summarize other factors in the clock synchronization process (e.g., network jitter, inaccuracies from the clocks not perfectly executing the integration cycles at the same time), but in general we assume that $\Delta_{error}$ will be a rather small factor compared to the real clock drift. Hence, we use the term drift offset, or *drift* for short, for the sum of deviations of a clock from the perfect clock within one integration cycle.

$$drift = R_{sync} \times \rho + \Delta_{error} \qquad (1)$$

In TTEthernet we are interested in the precision of the non-faulty clocks, where the precision is defined as the maximum difference between any two non-faulty clocks in the system. Now, in order to determine the precision we do not need the actual clock readings, but only the sequences of their differences to the perfect clock. Fig. 4 shows this approach of modeling time to verify the precision. The *x*-axis represents real time, the *y*-axis represents the clock time deviations from the perfect clock. In each step from even to odd *x* values the drift offset for an integration cycle i is added. At each even *x* value we see the maximum offset after the execution of the clock synchronization algorithm. Note that the *x*-axis is therefore not equally spaced with respect to real time, the drift offset step simulates the drift over the integration cycle, while the execution time of the clock synchronization algorithm is only a fraction of the integration cycle length.

### 3.2 Simulation with SAL

The design of distributed algorithms is notoriously difficult, in particular in the case of fault-tolerant algorithms. The interactions of the components are hard to trace and even trivial interdependencies may not be obvious when designing an algorithm on paper only. Hence, the analysis of new algorithms by means of computer aided verification and simulation becomes more and more state-of-the-art. Simulation in particular allows to explore an algorithm's behavior in a very early phase of its design.

In addition to pure simulations, the model-checker approach allows us to use "wildcards" for which the tool is free to assign non-deterministic values. Hence, instead of a single simulation run that takes as input a specific test vector and analyzes the system behavior under this test, the model checker approach systematically searches the state space for all possible evaluations for each wildcard.

As we will discuss for the following two algorithms, simulation with SAL is used to add new functionality to the TTEthernet clock synchronization algorithm and to explore its behavior.

### 3.3 Formal Proof with SAL

As we gain more and more trust in the design of our algorithm we also have as a goal to actually formally prove some properties of interest. This is the true power of our formal framework, while we immediately deduce information through simulation, we can almost seamlessly switch to formal verification.

The proof of a property $\square P$ is done by *k*-induction [11], which is a generalized form of regular induction and consists of the following stages [12]:

• Base Case: Show that all the states reachable from *I* in no more than *k*-1 steps satisfy P

• Induction Step: For all trajectories $\sigma_0 \rightarrow ... \rightarrow \sigma_k$ of length *k*, show that $\sigma_0 \models P \wedge ... \wedge \sigma_{k-1} \models P \Rightarrow \sigma_k \models P$

*k*-induction is a powerful verification tool, but it can be directly applied only to relatively simple state-transition systems. For more complex systems we need to construct a system-level abstraction. Formally, a system-level abstraction $\mathcal{A}$ is also a state-transition system of the form $\langle S, \mathcal{I}, \rightarrow \mathcal{A} \rangle$, where *S* is a set of abstract states $\Sigma_i$ and $\mathcal{I} \in \mathcal{S}$ is the initial abstract state. Furthermore, $\rightarrow \mathcal{A}$ is a set of transitions between two abstract states. The system-level abstraction has to fulfill the following properties.

• Each system state $\sigma_i$ is described by at least one abstract state $\Sigma_j$.

• The initial abstract state $\mathcal{I}$ describes at least one initial system state.

• For each transition in $\rightarrow$ that brings the system from a system state $\sigma_1$ to a system state $\sigma_2$ there either exists an

abstract transition in $\rightarrow \mathcal{A}$ such that $\sigma_1$ is described by the abstract state before the abstract transition and $\sigma_2$ is described by the abstract state after the abstract transition has been taken, or, if such an abstract transition does not exist, then the abstract state describing $\sigma_1$ must also describe $\sigma_2$.

Using the abstraction approach, the formal verification of a property $\Box P$ is done in two steps. In the first step we verify that the abstraction correctly represents the model $\mathcal{M}$ (i.e., it satisfies the properties listed above): $\mathcal{M} \models \mathcal{A}$ and in the second step we verify that the model $\mathcal{M}$ together with the abstraction $\mathcal{A}$ satisfies $\Box P$: $\mathcal{M} \wedge \mathcal{A} \models \Box P$.

We illustrate this abstraction method using the example of the verification of the TTEthernet clock synchronization algorithm as verified in [4]. In this model each SM is described by a state machine and all state machines are executed synchronously. For simplicity, we assume that each of these state machines has only two variables, SM_state and SM_clock, where SM_state is either sync or send and SM_clock keeps track of the divergence from the perfect clock. The current system state is simply the sum of all of the current local states of the SMs.

Fig. 5 depicts a system-level abstraction for the TTEthernet that fulfills the abstraction properties listed above. In this case the abstraction is very simple and consists only of the two abstract states SMALL and BIG. BIG is an abstract state that requires all SMs to be in the sync state at the same time while in the abstract state SMALL, all SMs must be in the send state. Furthermore, *precision* will be bounded by some real constant FACTOR-small times max(*drift*) in the SMALL abstract state and by some other real constant FACTOR times max(*drift*) in the BIG state. FACTOR-small < FACTOR holds and both numbers are derived manually or by re-running the model checking until no counterexamples are produced. These numbers depend on the number and type of failures present in the system and for TTEthernet FACTOR is between 2 and 4 (hence, the precision in TTEthernet is in [2 × max(*drift*), 4 × max(*drift*)].

It is easy to see that all SMs are consistently either in sync or send, given that all SMs start in the same state and change state synchronously. The resulting error of this synchronous approximation is covered in the term $\Delta_{error}$ of Equation 1. Note, as we already specify the precision in the abstraction, proving abstraction $\mathcal{A}$ makes the proof of the property $\Box P$ trivial. This results in high verification times for $\mathcal{A}$ and negligible ones for $\Box P$, as reported in [4] and in the following sections for the new algorithms.

We will discuss in the following two example algorithms how the basic TTEthernet clock synchronization model is updated with new system-level abstractions to derive automated and integrated formal proofs.

## 4 Diagnosis Algorithm

The TTEthernet clock synchronization algorithm is inherently fault-tolerant. However, the synchronization quality decreases with the number of faulty components and the severity of their failure modes. The diagnosis algorithm presented in this section aims to detect faulty TTEthernet devices, in particular faulty CMs, and remove them from the TTEthernet clock synchronization algorithm. By doing so, the failure mode of a faulty CM is transformed from an inconsistent-omission failure mode to a fail silent failure mode and we can formally verify that the diagnosis algorithm improves the precision in the system.

### 4.1 Algorithm Specification

The diagnosis algorithm is based on a simple accusation protocol presented by Algorithm 4 and Algorithm 5.

---

**Algorithm 4** Diagnosis Algorithm executed by SM $i$

---

1: **if** $CM\_clock_j \neq \bot$ **then**
2:    $active[j] \leftarrow TRUE$
3: **end if**
4: **for** $j = 1 \rightarrow |CM|$ **do**
5:    **if** $CM\_clock_j = \bot \wedge active[j]$ **then**
6:       $accused[i][j], AC_i.accused[j] \leftarrow TRUE$
7:    **end if**
8: **end for**

---

Algorithm 4 is executed in the SMs immediately after the clocks are corrected (see Fig. 2 on the temporal dependencies of the algorithms to each other). It starts with each SM recording those CMs from which they receive PCFs (lines 1 - 3) using an array *active* of boolean variables. The symbol $\bot$ denotes the absence of a PCF and in case that the clock of CM j is not absent (hence, the SM received a PCF from CM *j*) the respective *active[j]* will be set to *TRUE*.

In the remaining lines (4 - 8) an SM i checks for each CM *j* whether it has been active before, but it did not receive a PCF in the current integration cycle. If this is the case, SM i accuses CM j to be omission faulty. For simplicity, we assume that this accusation information is stored in a local accusation matrix *accused[i][j]*, indexed by the SMs and CMs. Furthermore, SM i informs all other SMs of its accusation by sending and accusation message $AC_i$, where $AC_i$.*accused* is a vector of boolean variables with each boolean representing a unique CM. SM i will set $AC_i$.*accused[j]* if it accuses CM *j*. Again, for simplicity, we assume that the $AC_i$ messages are sent as rate-constrained traffic on all redundant channels in a TTEthernet system. By the TTEthernet network it is, thus, ensured that the $AC_i$ messages are delivered with a known upper bound in time and are transported over at least one non-faulty channel. We furthermore, assume that the exchange of the accusation information happens sufficiently prior to the next execution of the TTEthernet clock synchronization algorithm.

---

**Algorithm 5** Accusation Message Reception in SM $i$

---

1: **if** $receives(AC_k)$ **then**
2:   **for** $j = 1 \rightarrow |CM|$ **do**
3:     **if** $AC_k.accused[j]$ **then**
4:       $accused[k][j] \leftarrow TRUE$
5:     **end if**
6:   **end for**
7: **end if**

---

Algorithm 5 is executed by an SM i that receives an accusation message $AC_k$ from an SM *k*: when a boolean variable in $AC_k$.*accused[j]* is *TRUE*, SM i sets the corresponding local *accused[k][j]* to *TRUE* as well. Each SM, thus, uses the matrix *accused* to locally store all accusations from all SMs.

Once an SM *k* accuses a CM or receives sufficient accusations for a CM, it will stop using the PCFs from this CM. Hence, the selection function presented in Algorithm 2 will also take the *accused* matrix into account when returning the set of *CM_clock* such that all *CM_clock$_j$* will be excluded that are accused by a sufficiently high number, z, of SMs. We can update line 7 in Algorithm 2 accordingly:

$$\{CM\_clock \quad | \quad pcf\_memberhip\_new \geq accept\_threshold \wedge$$
$$CM\_clock_j \Rightarrow \neg accused[k][j] \wedge$$
$$CM\_clock_j \Rightarrow \neg \exists i_1, \ldots, i_z :$$
$$accused[i_1][j] \wedge \ldots \wedge accused[i_z][j]\}$$

An alternative realization to modifying the selection function is the deactivation of the communication link that connects the SM to the faulty CM.

Under a single failure fault-hypothesis, as assumed in this paper, *z* = 2 is sufficient and necessary to compensate a faulty SM that may arbitrarily accuse CMs. In this case, an SM that receives two accusations for a CM can be certain that one of the accusations stems from a correct SM. Furthermore, as either an SM or a CM are faulty at the same point in time, a faulty SM excludes the presence of a faulty CM and, hence, even accusations of a faulty SM are distributed by all CMs consistently.

### 4.2 Verification Procedure and Results

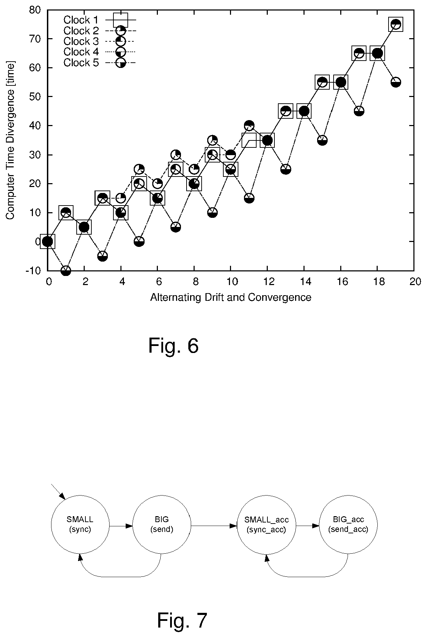

We have extended the basic model of the TTEthernet clock synchronization algorithm by the functionality of the diagnosis algorithm as presented in this section. Using our formal framework we can start by simulating the diagnosis and clock synchronization algorithms together. Fig. 6 depicts such a simulation outcome of a scenario in a system of five SMs and two CMs where CM 1 is faulty in such a way that it may accept only a subset of *SM_clock* values. Hence, in general the compressed clocks, *CM_clock$_j$* produced by the CMs will be different.

Fig. 6 plots the divergence of the clock times from real time as described for Fig. 4. In this scenario the clocks of SM 1-3 (denoted by Clock 1-3) have positive drift of 10 time units while the clocks of SMs 4 and 5 (denoted by Clock 4 and 5) have negative drift of 10 time units. In the first integration cycle all SMs receive PCFs from both CMs. In the second integration cycle all SMs except SM 2 receive PCFs from CM 1 (at x=3). Consequently, SM 2 will correct its clock slightly differently than the remaining SMs (at x=4). As SM 2 did not receive a PCF, it accuses CM 1 and will no longer accept PCFs from CM 1. As long as CM 1 does not fail to send a PCF to one of the other SMs, SM 2 always deviates from the remaining SMs after clock correction. However, in the fifth integration cycle (at x=9), CM 1 does not send a PCF to SM 3, which in turn also accuses CM 1. As now, SM 2 and SM 3 accuse CM 1 of being faulty, all SMs exclude $CM\_clock_1$ from clock synchronization. Finally, from the sixth integration cycle on (at x=11) all SMs will only use $CM\_clock_2$ for clock synchronization and the inconsistent omission failure mode of CM 1 is transformed into a fail-silence failure.

Simulation traces such as the one depicted above are valuable during the design of algorithms. However, our formal framework also allows us to formally verify the correctness of the diagnosis algorithm. For this we replace the system-level abstraction with a new one depicted in Fig. 7. As shown, the abstraction extends the one of the TTEthernet clock synchronization algorithm with two abstract system states SMALL-acc and BIG-acc. This extension is a good example of how intuitively the abstraction process is: as long as the number of accusations is insufficient, the system transitions between SMALL and BIG. Once the accusations reach the threshold the SMALL_acc and BIG_acc are entered and the SMs transition between these two abstract states. The difference between the first two abstract states and the later ones is that the precision improves in SMALL_acc and BIG_acc (after a delay of one integration cycle).

The diagnosis algorithm ensures that once the faulty CM is detected by a sufficiently high number of SMs, the exclusion of the faulty CM improves the precision from $\frac{8}{3} \times \max(drift)$ to $2 \times \max(drift)$.

### Theorem 2.

$$\exists i_1, \ldots, i_z : accused[i_1][j] \wedge \ldots \wedge accused[i_z][j]$$
$$\Rightarrow precision \leq 2 \times \max(drift)$$

*Proof.* Theorem 2 has been proven by model checking using sal-inf-bmc, *k*-induction and the abstraction as depicted in Fig. 7 with the following performance characteristics (*k* represents the depth of the induction base and *time* the verification time in seconds):

|  | k | time |  | k | time |
|---|---|---|---|---|---|
| Abstraction $\mathcal{A}$ | 5 | 180.00 | Precision $\Box P$ | 4 | 3.55 |

□

### 4.3 Algorithm Discussion

The simple diagnosis algorithm can be extended in several ways some of which we discuss next. However, in this paper we do not consider this extensions in our analysis as our prime focus is on the demonstration of an integrated proof when layering a diagnosis service on top of an established clock synchronization algorithm rather than analyzing all variants of the diagnosis approach.

As a first extension, the SM may accuse a CM only after a configurable number of lost PCFs per configured time-interval. This would mitigate the probability that a CM is accused because of a transient error or because of a bit error as the Ethernet frame is transported over the communication link. Secondly, for the same reasons the accusation may be reset in all SMs to a allow an accused CM to rejoin the TTEthernet clock synchronization algorithm. Lastly, the SMs may also take statistics on the number of lost application Ethernet frames into account in their determination whether to accuse a CM or to remove an accusation.

### 5 Rate-Correction Algorithm

In this section we present the clock rate-correction algorithm that can be implemented as a layer on top of the TTEthernet clock synchronization algorithm. The rate-correction algorithm records the clock state-correction values for a configurable number of integration cycles. It then calculates an average of the corrected values and changes the rate of the clocks for a configurable percentage of this average. In any case the change of rate is bound by the maximum drift offset max(*drift*) from a perfect reference time.

### 5.1 Algorithm Specification

Algorithm 6 is executed in each SM after the clocks have been corrected by the TTEthernet state-correction algorithm (Alg. 2, 3 in Fig. 2). It consists of an observation phase (lines 1 - 3) and the correction phase (lines 4 - 12). In line 13 the integer variable *cycle* is increased, which we use to count the integration cycles.

The rate-correction algorithm starts with the observation phase in which the actual correction values that are calculated by the TTEthernet clock synchronization algorithm are stored for each integration cycle in the observation phase. To store, we use the array *drift_obs*[*cycle*] of real values.

---

**Algorithm 6** Rate-Correction Algorithm executed by SM $i$

---

1: **if** $cycle \leq rate\_obs\_nr$ **then**

2:    $drift\_obs[cycle] \leftarrow act\_corr$

3: **end if**

4: **if** $cycle = rate\_obs\_nr$ **then**

5:    $corr \leftarrow \left( \sum_{l=1}^{l \leq rate\_obs\_nr} drift\_obs[l] \right) \div rate\_obs\_nr$

6:    **if** $corr > \max(drift)$ **then**

7:      $corr = \max(drift)$

8:    **else if** $corr < -\max(drift)$ **then**

9:      $corr = -\max(drift)$

10:    **end if**

11:    $clock\_rate \leftarrow clock\_rate - corr$

12: **end if**

13: $cycle \leftarrow cycle + 1$

---

The observation phase completes after a configurable number of integration cycles *rate_obs_nr* and the correction phase starts (line 4).

In the correction phase, the intermediate correction value that the algorithm first calculates is the arithmetic mean of the individual correction values (line 5). If the mean exceeds the configured maximum drift offset a non-faulty clock would exhibit (i.e., max(*drift*)) the correction value *corr* is reduced to these bounds (lines 6 -10). Finally, after the correction value is calculated and bounded it is used to correct the current rate of the local clock (line 11). Although it is not depicted in Algorithm 6, only a pre-configured percentage of the correction value may be used to correct a clock's rate.

Note that the modification of a clock's rate not necessarily demands a change of the physical oscillator frequency, but rather the number of oscillator ticks per integration cycle, which is a configurable parameter, can be changed. Hence, a change of a clock's rate is equivalent to increasing or decreasing the number of oscillator ticks per integration cycle.

### 5.2 Verification Procedure and Results

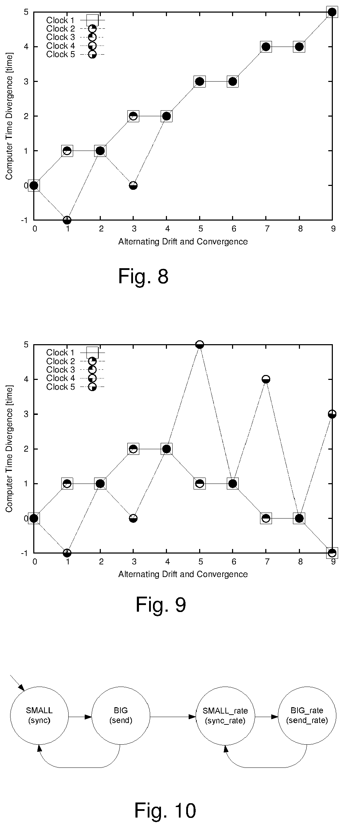

In our formal analysis of the rate-correction algorithm we use a network of five SMs and two channels, where each channel implements exactly one CM. We have extended the formal model of the TTEthernet clock synchronization algorithm with the additional functionality described in Algorithm 6. Again, we start with some simulations to get confidence in the correctness of the design of the layered rate-correction algorithm as well as in the formal model of it. An example scenario is presented in Fig. 8.

Fig. 8 plots the divergence of the clock times from real time as introduced in Fig. 4. Clocks 1 to 3 have a positive drift, while clocks 4 and 5 have a negative drift. The first two integration cycles are configured as the observation phase in which the nodes record their clock correction values. After the second integration cycle, the clocks calculate the *corr* value as specified in Algorithm 6 and adapt the rate of their clocks. In the scenario of Fig. 8 *corr* does not exceed the *max*(*drift*) and as depicted, from the third integration cycle onwards, all clocks are almost perfectly aligned.

The scenario as discussed above is certainly idealized as it reflects certainly strong assumption, as for example perfectly stable clock drifts. In reality, this will hardly be the case. Fig. 9 shows a scenario with unstable clocks and resulting changing drift rates. Here, during the first integration cycle, clocks 1 to 3 have positive drift while clocks 4 and 5 have negative drift. Analogously to the stable drift scenario, clocks 4 and 5 are the only clocks that correct their clock state. At the end of integration cycle two clocks 4 and 5 have established *corr* = 2 (as they corrected +2 time units in each of the first two integration cycles). Now, the drift of the clocks changes, in a way that clocks 1 to 3 now drift in the negative direction while clocks 4 and 5 drift in the positive direction. Consequently, the correction value that clocks 4 and 5 apply adds up to the now positive drift and leads to an increase in the precision in the system.

To formally verify properties about the rate-correction algorithm we define the system-level abstraction as depicted in Fig. 10. The graph is essentially the same as for the diagnosis abstraction, however the underlying abstract states and transitions are, of course, different. The abstraction consists of four abstract states SMALL, BIG, SMALL_rate, and BIG_rate. SMALL and BIG represent the system during the observation phase, while SMALL-rate and BIG_rate represent the system when the clock rates are adapted. Again, the system-level abstraction very naturally reflects the algorithm phases.

We use this abstraction to verify the precision under the condition of unstable clock drifts. As discussed in the scenario of Fig. 9 the precision may become larger when the drift of the clocks changes in the same direction as the rates are corrected to. The general theorem is as follows: the rate-correction algorithm ensures that, even under arbitrarily changing drift rates within the specified drift range, and in presence of an inconsistent omission faulty CM, the overall precision is bound by 8/3 × 2 × *max*(*drift*)*.*

## Theorem 3.

$$precision \leq \frac{8}{3} \times 2 \times max(drift)$$

*Proof.* Theorem 3 has been proven by model checking using sal-inf-bmc, *k*-induction and the abstraction as depicted in Fig. 10 with the following performance characteristics (*k* represents the depth of the induction base and *time* the verification time in seconds):

| | *k* | *time* | | *k* | *time* |
|---|---|---|---|---|---|
| Abstraction $\mathcal{A}$ | 5 | 1432.69 | Precision $\square P$ | 4 | 219.77 |

$\square$

### 5.3 Algorithm Discussion

The rate-correction algorithm is a simple means to improve the precision in a system when the drift rates of the clocks can be assumed to be stable to some degree. However, even if they are not stable the rate-correction algorithm can improve the precision if the rate-correction algorithm is executed periodically and the change of the drift is relatively slow compared to the frequency of execution of the rate-correction algorithm.

As TTEthernet is intended as integrative network for mixed-criticality systems it may also be the case that some nodes of a network will be more affected by physical processes, like heat, than others. In this case, the system architect may configure more affected nodes as synchronization clients which only passively synchronize to the TTEthernet timeline as generated by the SMs and CMs. Even further, the system architect may decide to run the rate-correction algorithm on the synchronization clients more frequently than on the SMs.

The location of a node within the network can also influence the design decision on how often to run the clock-rate correction algorithm. Systems that are in spatial proximity to physical processes with varying temperature ranges, e.g., motor control, may have require to run the rate-correction algorithm frequently. Other systems may adjust their rate only after initial synchronization.

The detailed discussion of these architectural decisions is outside of the scope of this paper and we target at an evaluation in the context of a real-world application.

The rate-correction algorithm is executed in the SMs. Although, the CMs may adjust their clock rate to the SMs as well, the formal assessment of such configurations is outside of the scope of this paper and plan to explore this behavior in future work.

### 6 Conclusion

This paper has introduced new distributed algorithms which can be implemented as layers on top of the TTEthernet clock synchronization protocol. We have presented a diagnosis algorithm and a clock rate-correction algorithm. The diagnosis algorithm follows a simple accusation protocol and aims to identify failure scenarios in which a faulty CM inconsistently distributes synchronization information. When such a faulty CM is diagnosed, then the non-faulty SMs consistently discard all synchronization information from the faulty CM. As a result of the diagnosis algorithm, the precision in the synchronized network improves and we have presented formal evidence for that. The clock rate-correction algorithm is executed in each of the SMs and continually records the clock state-correction values that the TTEthernet clock synchronization protocol calculates. After a configurable number of consecutive measurements all SMs use these measurements to adapt the rates of their clocks. By simulation we have shown, that the precision in the synchronized network improves and we have formally verified that the precision is still bounded when the clock drifts change arbitrarily within given bounds.

For our studies we have developed a novel simulation and verification framework that allows the integrated verification of algorithms such as the ones discussed above together with the underlying clock synchronization protocol. This formal framework is based on a model checker for infinite data types, which allows to realistically model real-time clocks. Furthermore, the framework enables push-button proofs that reduces the overhead of human deduction in the verification process to finding good system-level abstractions, which we have shown follows quite naturally from an algorithm's behavior.

## References

[1] H. Kopetz and G. Bauer, "The time-triggered architecture," Proceedings of the IEEE, vol. 91, no. 1, pp. 112 - 126, Jan. 2003.

[2] H. Kopetz, TTP/C Protocol - Version 1.0. Vienna, Austria: TTTech Computertechnik AG, Jul. 2002, Available at http://www.ttagroup.org.

[3] W. Steiner, TTEthernet Specification, TTA Group, 2008, Available at http://www.ttagroup.org.

[4] W. Steiner and B. Dutertre, "Automated formal verification of the ttethernet synchronization quality," in NASA Formal Methods, ser. Lecture Notes in Computer Science, M. Bobaru, K. Havelund, G. Holzmann, and R. Joshi, Eds. Springer Berlin / Heidelberg, 2011, vol. 6617, pp. 375-390.

[5] W. Torres-Pomales, M. R. Malekpour, and P. Miner, ROBUS-2: A Fault-Tolerant Broadcast Communication System. Hampton, Virginia, USA: Langley Research Center, 2005.

[6] M. Serafini, P. Bokor, N. Suri, J. Vinter, A. Ademaj, W. Brandstätter, F. Tagliabo, and J. Koch, "Application-level diagnostic and membership protocols for generic time-triggered systems," IEEE Trans. Dependable Sec. Comput., vol. 8, no. 2, pp. 177-193, 2011.

[7] FlexRay Communications System - Protocol Specification - Version 2.1. FlexRay Consortium, 2005, Available at http://www.flexray.com.

[8] H. Kopetz, A. Ademaj, and A. Hanzlik, "Combination of clock-state and clock-rate correction in fault-tolerant distributed systems," Real-Time Systems, vol. 33, no. 1-3, pp. 139-173, 2006.

[9] W. Steiner and B. Dutertre, "SMT-Based formal verification of a TTEthernet synchronization function," in Formal Methods for Industrial Critical Systems, ser. Lecture Notes in Computer Science, S. Kowalewski and M. Roveri, Eds., vol. 6371. Springer-Verlag, 2010, pp. 148-163.

[10] L. de Moura, S. Owre, H. Rueß, J. Rushby, N. Shankar, M. Sorea, and A. Tiwari, "Tool presentation: SAL2," in Computer-Aided Verification (CAV 2004), S. Verlag, Ed., 2004.

[11] L. de Moura, H. Rueß, and M. Sorea, "Bounded model checking and induction: From refutation to verification," in Computer-Aided Verification, CAV 2003, ser. Lecture Notes in Computer Science, A. Voronkov, Ed., vol. 2725. Springer-Verlag, 2003, pp. 14-26.

[12] B. Dutertre and M. Sorea, "Modeling and verification of a fault-tolerant real-time startup protocol using calendar automata," in Proc. of FORMATS/FTRTFT, ser. Lecture Notes in Computer Science, Y. Lakhnech and S. Yovine, Eds., vol. 3253. Springer-Verlag, Sep. 2004, pp. 199-214.

**Description of Figures**

Fig. 1 describes an Example TTEthernet network with *n* end systems and two redundant channels (each formed by a single switch).

Fig. 2 describes an overview of the TTEthernet two step clock synchronization algorithm.

Fig. 3 describes the progress in Real Time plotted against Clock Time.

Fig. 4 describes an example execution of the TTEthernet clock synchronization algorithm in presence of a faulty CM.

Fig. 5 describes a system-level abstraction for the formal proof.

Fig. 6 describes an example execution of the diagnosis algorithm as layered on top of the TTEthernet clock synchronization algorithm in presence of a faulty CM.

Fig. 7 describes a system-level abstraction for the formal proof of the diagnosis algorithm.

Fig. 8 describes a fault-free scenario of the layered rate-correction algorithm.

Fig. 9 describes a fault-free scenario of the layered rate-correction algorithm with highly varying clock drifts.

Fig. 10 describes a system-level abstraction for the formal proof of the rate-correction algorithm.

**Claims**

1. Method for diagnosis of failures in a network, wherein the network comprises nodes, each node having a local clock, and wherein the nodes are connected to each other in an arbitrary network topology, and wherein a two-step clock synchronization algorithm is realized in the network, the two-step clock synchronization algorithm comprises

   -) a first step, in which all nodes of a first subset of nodes (SM) are providing their local clock state (SM_clock) via messages to the network and wherein all nodes of a second subset of nodes (CM) are receiving these messages, and wherein the nodes of the second subset of nodes (CM) are performing a first convergence function on the local clock readings, and
   -) a second step, in which the nodes of the second set of nodes (CM) transmit the result (CM_clock) of the calculation of the convergence function of the first step to the network in form of messages,

   and wherein nodes of a first subset of nodes (SM) and/or other nodes (SC) in the system that receive this messages from the second subset of nodes (CM) apply a second convergence function based on the timing information associated with these messages, and

   wherein nodes which are receiving messages from the second subset of nodes (CM) use the timing information associated with at least a subset of these messages to correct their local clocks, **characterized in that**
   at least one first node from the first subset of nodes (SM) stops using messages from a specific second node of the second subset of nodes (CM) when said at least one first node classifies said specific second node as faulty.

2. Method according to claim 1, wherein a first node of a first subset of nodes (SM) classifies a specific second node of a second subset of nodes (CM) as faulty when the classifying first node has received messages from said specific second node since the power-on of classifying first node, but has stopped receiving messages from said specific second node for a configurable duration.

3. Method according to claim 1 or 2, wherein said classifying first node sends a classifying message to all other nodes of the first subset (SM) of nodes when it classifies a specific second node as faulty, thereby informing the first subset of nodes (SM) of the decision of the first node that the second node is faulty.

4. Method according to claims 3, wherein a classifying first node periodically re-sends said classifying message.

5. Method according claim to one of the claims 1 to 4, wherein a first node from the first subset of nodes (SM) classifies a specific second node from the second subset of nodes (CM) as faulty, when said first node from the first subset of nodes (SM) receives messages from a configurable number of nodes from the first subset of nodes (SM), which messages indicate that said specific second node of the second subset of nodes (CM) is faulty.

6. Method according to one of the claims 1 to 5, in which a first node of the first subset of nodes (SM) stops classifying a specific second node from the second subset of nodes (CM) as faulty after a configurable duration, thereby, again accepting and using the messages from said specific second node.

**7.** Method according claim to one of the claims 1 to 5, in which a first node of the first subset of nodes (SM) stops classifying a second node from the second subset of nodes (CM) as faulty when it is instructed by messages from a configurable number of other nodes in the system of doing so, thereby, again accepting and using the messages from said second node.

**8.** Method according to one of the claims 1 to 7, wherein the end systems use the diagnosis information of TTEthernet as specified in the AS6802 standard to keep track on the succeeding clock correction.

**9.** Method according one of the claims 1 to 8, wherein the clock rate of the local clock in each node can be changed only up to a preconfigured maximum.

**10.** Data processing system comprising means for carrying out the steps of a method according to one of the claims 1 to 9, wherein the data processing system consists of nodes, each node having a local clock, wherein the nodes are connected to each other in an arbitrary network topology

**11.** Data processing system according to claim 10, **characterized in that** each nodes is either an end system or a switch.

**12.** Data processing system according to claim 11, wherein the network comprises multiple tree connections, wherein each tree is formed of a disjoint subset of switches, and wherein a subset of end systems is connected to exactly one switch of each tree of the set of redundant trees.

**13.** Data processing system according to claim 11 or 12, wherein the subset of nodes that send messages in the first step of the two-step clock synchronization approach is a subset of the end systems.

**14.** Data processing system according one of the claims 11 to 13, wherein the subset of nodes that perform the first convergence function is a subset of the switches in the network.

**Patentansprüche**

**1.** Verfahren zur Diagnose von Fehlern in einem Netzwerk, wobei das Netzwerk Knoten aufweist, jeder Knoten einen Systemtakt aufweist, und wobei die Knoten miteinander in einer willkürlichen Netzwerktopologie verbunden sind, und wobei ein zweistufiger Taktsynchronisierungsalgorithmus in dem Netzwerk realisiert ist und der zweistufige Taktsynchronisierungsalgorithmus aufweist

-) einen ersten Schritt, bei dem alle Knoten einer ersten Untergruppe von Knoten (SM) ihren Systemtaktzustand (SM_clock) über Nachrichten an das Netzwerk bereitstellen, und wobei alle Knoten einer zweiten Untergruppe von Knoten (CM) diese Nachrichten empfangen, und wobei die Knoten der zweiten Untergruppe von Knoten (CM) eine erste Konvergenzfunktion an den Systemtaktmesswerten ausführen und

-) einen zweiten Schritt, bei dem die Knoten der zweiten Gruppe von Knoten (CM) das Resultat (CM_clock) der Berechnung der Konvergenzfunktion des ersten Schritts in der Form von Nachrichten an das Netzwerk senden,

und wobei Knoten einer ersten Untergruppe von Knoten (SM) und/oder andere Knoten (SC) in dem System, die die Nachrichten von der zweiten Untergruppe von Knoten (CM) empfangen, basierend auf den Taktsteuerungsinformationen, die mit diesen Nachrichten verknüpft sind, eine zweite Konvergenzfunktion anwenden, und wobei Knoten, die Nachrichten von der zweiten Untergruppe von Knoten (CM) empfangen, die mit mindestens einer Untergruppe dieser Nachrichten verknüpfte Taktsteuerungsinformationen verwenden, um ihre Systemtakte zu korrigieren, **dadurch gekennzeichnet, dass** mindestens ein erster Knoten von der ersten Untergruppe von Knoten (SM) stoppt, Nachrichten von einem spezifischen zweiten Knoten der zweiten Untergruppe von Knoten (CM) zu verwenden, wenn der mindestens eine erste Knoten den spezifischen zweiten Knoten als fehlerhaft klassifiziert.

**2.** Verfahren nach Anspruch 1, wobei ein erster Knoten einer ersten Untergruppe von Knoten (SM) einen spezifischen zweiten Knoten einer zweiten Untergruppe von Knoten (CM) als fehlerhaft klassifiziert, wenn der klassifizierende erste Knoten von dem spezifischen zweiten Knoten seit dem Einschalten des ersten klassifizierenden Knotens Nachrichten empfangen hat, aber das Empfangen von Nachrichten von dem spezifischen zweiten Knoten für eine konfigurierbare Dauer gestoppt hat.

3. Verfahren nach Anspruch 1 oder 2, wobei der klassifizierende erste Knoten eine klassifizierende Nachricht an alle anderen Knoten der ersten Untergruppe (SM) von Knoten sendet, wenn er einen spezifischen zweiten Knoten als fehlerhaft klassifiziert, und dadurch die erste Untergruppe von Knoten (SM) über die Entscheidung des ersten Knotens informiert, dass der zweite Knoten fehlerhaft ist.

4. Verfahren nach den Ansprüchen 3, wobei ein klassifizierender erster Knoten die klassifizierende Nachricht periodisch erneut sendet.

5. Verfahren nach einem Anspruch der Ansprüche 1 bis 4, wobei ein erster Knoten von der ersten Untergruppe von Knoten (SM) einen spezifischen zweiten Knoten von der zweiten Untergruppe von Knoten (CM) als fehlerhaft klassifiziert, wenn der erste Knoten von der ersten Untergruppe von Knoten (SM) Nachrichten von einer konfigurierbaren Knotenzahl von der ersten Untergruppe von Knoten (SM) empfängt, wobei die Nachrichten anzeigen, dass der spezifische zweite Knoten der zweiten Untergruppe von Knoten (CM) fehlerhaft ist.

6. Verfahren nach einem der Ansprüche 1 bis 5, wobei ein erster Knoten der ersten Untergruppe von Knoten (SM) nach einer konfigurierbaren Dauer stoppt, einen spezifischen zweiten Knoten von der zweiten Untergruppe von Knoten (CM) als fehlerhaft zu klassifizieren, und dadurch erneut die Nachrichten von dem spezifischen zweiten Knoten akzeptiert und verwendet.

7. Verfahren nach einem der Ansprüche 1 bis 5, wobei ein erster Knoten von der ersten Untergruppe von Knoten (SM) stoppt, einen zweiten Knoten von der zweiten Untergruppe von Knoten (CM) als fehlerhaft zu klassifizieren, wenn er durch Nachrichten von einer konfigurierbaren Anzahl an anderen Knoten in dem System angewiesen wird, dies zu tun, und dadurch erneut die Nachrichten von dem zweiten Knoten akzeptiert und verwendet.

8. Verfahren nach einem der Ansprüche 1 bis 7, wobei die Endsysteme die Diagnoseinformationen von TTEthernet wie angegeben im Standard AS6802 verwenden, um die aufeinanderfolgende Taktkorrektur nachzuverfolgen.

9. Verfahren nach einem der Ansprüche 1 bis 8, wobei die Taktfolge des Systemtakts in jedem Knoten nur bis zu einem vorkonfigurierten Maximum geändert werden kann.

10. Datenverarbeitungssystem, das Mittel zum Ausführen der Schritte eines Verfahrens nach einem der Ansprüche 1 bis 9 aufweist,
wobei das Datenverarbeitungssystem aus Knoten besteht und jeder Knoten einen Systemtakt aufweist, wobei die Knoten miteinander in einer willkürlichen Netzwerktopologie verbunden sind.

11. Datenverarbeitungssystem nach Anspruch 10, **dadurch gekennzeichnet, dass** jeder Knoten entweder ein Endsystem oder ein Switch ist.

12. Datenverarbeitungssystem nach Anspruch 11, wobei das Netzwerk mehrere Baumverbindungen aufweist, wobei jeder Baum aus einer getrennten Untergruppe von Switches gebildet ist, und wobei eine Untergruppe von Endsystemen mit genau einem Switch jedes Baums der Gruppe an redundanten Bäumen verbunden ist.

13. Datenverarbeitungssystem nach Anspruch 11 oder 12, wobei die Untergruppe von Knoten, die Nachrichten im ersten Schritt der zweistufigen Taktsynchronisierungsherangehensweise sendet, eine Untergruppe der Endsysteme ist.

14. Datenverarbeitungssystem nach einem der Ansprüche 11 bis 13, wobei die Untergruppe von Knoten, welche die erste Konvergenzfunktion ausführen, eine Untergruppe der Switches im Netzwerk ist.

**Revendications**

1. Procédé de diagnostic de défaillances dans un réseau, dans lequel le réseau comprend des noeuds, chaque noeud ayant une horloge locale, et dans lequel les noeuds sont connectés les uns aux autres dans une topologie de réseau arbitraire, et dans lequel un algorithme de synchronisation d'horloge en deux étapes est réalisé dans le réseau, l'algorithme de synchronisation d'horloge en deux étapes comprenant

-) une première étape, dans laquelle tous les noeuds d'un premier sous-ensemble de noeuds (SM) fournissent leur état d'horloge locale (SM_clock) par l'intermédiaire de messages au réseau et dans laquelle tous les noeuds d'un second sous-ensemble de noeuds (CM) reçoivent ces messages, et dans laquelle les noeuds du second sous-ensemble de noeuds (CM) réalisent une première fonction de convergence sur les lectures d'horloge locale, et

-) une seconde étape, dans laquelle les noeuds du second ensemble de noeuds (CM) transmettent le résultat (CM_clock) du calcul de la fonction de convergence de la première étape au réseau sous la forme de messages, et dans laquelle des noeuds d'un premier sous-ensemble de noeuds (SM) et/ou d'autres noeuds (SC) dans le système qui reçoivent ces messages à partir du second sous-ensemble de noeuds (CM) appliquent une seconde fonction de convergence sur la base des informations de temporisation associées à ces messages, et dans laquelle des noeuds qui reçoivent des messages à partir du second sous-ensemble de noeuds (CM) utilisent les informations de temporisation associées à au moins un sous-ensemble de ces messages pour corriger leurs horloges locales, **caractérisé en ce que**

au moins un premier noeud issu du premier sous-ensemble de noeuds (SM) arrête d'utiliser des messages provenant d'un second noeud spécifique du second sous-ensemble de noeuds (CM) lorsque ledit au moins un premier noeud classifie ledit second noeud spécifique comme étant défaillant.

2. Procédé selon la revendication 1, dans lequel un premier noeud d'un premier sous-ensemble de noeuds (SM) classifie un second noeud spécifique d'un second sous-ensemble de noeuds (CM) comme étant défaillant lorsque le premier noeud de classification a reçu des messages à partir dudit second noeud spécifique depuis la mise sous tension du premier noeud de classification, mais a arrêté de recevoir des messages à partir dudit second noeud spécifique pendant une durée configurable.

3. Procédé selon la revendication 1 ou 2, dans lequel ledit premier noeud de classification envoie un message de classification à tous les autres noeuds du premier sous-ensemble (SM) de noeuds lorsqu'il classifie un second noeud spécifique comme étant défaillant, permettant ainsi d'informer le premier sous-ensemble de noeuds (SM) de la décision du premier noeud selon laquelle le second noeud est défaillant.

4. Procédé selon la revendication 3, dans lequel un premier noeud de classification renvoie périodiquement ledit message de classification.

5. Procédé selon l'une des revendications 1 à 4, dans lequel un premier noeud issu du premier sous-ensemble de noeuds (SM) classifie un second noeud spécifique issu du second sous-ensemble de noeuds (CM) comme étant défaillant, lorsque ledit premier noeud issu du premier sous-ensemble de noeuds (SM) reçoit des messages à partir d'un nombre configurable de noeuds issus du premier sous-ensemble de noeuds (SM), lesquels messages indiquent que ledit second noeud spécifique du second sous-ensemble de noeuds (CM) est défaillant.

6. Procédé selon l'une des revendications 1 à 5, dans lequel un premier noeud du premier sous-ensemble de noeuds (SM) arrête de classifier un second noeud spécifique issu du second sous-ensemble de noeuds (CM) comme étant défaillant après une durée configurable, permettant ainsi d'accepter et d'utiliser une nouvelle fois les messages provenant dudit second noeud spécifique.

7. Procédé selon l'une des revendications 1 à 5, dans lequel un premier noeud du premier sous-ensemble de noeuds (SM) arrête de classifier un second noeud issu du second sous-ensemble de noeuds (CM) comme étant défaillant lorsqu'il reçoit une instruction de le faire par des messages provenant d'un nombre configurable d'autres noeuds dans le système, permettant ainsi d'accepter et d'utiliser une nouvelle fois les messages provenant dudit second noeud.

8. Procédé selon l'une des revendications 1 à 7, dans lequel les systèmes d'extrémité utilisent les informations de diagnostic de TTEthernet telles que spécifiées dans la norme AS6802 pour garder une trace de la correction d'horloge avec succès.

9. Procédé selon l'une des revendications 1 à 8, dans lequel la fréquence d'horloge de l'horloge locale dans chaque noeud peut être changée uniquement jusqu'à un maximum préconfiguré.

10. Système de traitement de données comprenant des moyens pour réaliser les étapes d'un procédé selon l'une des revendications 1 à 9, le système de traitement de données comprenant des noeuds, chaque noeud ayant une horloge locale, les noeuds étant connectés les uns aux autres dans une topologie de réseau arbitraire.

**11.** Système de traitement de données selon la revendication 10, **caractérisé en ce que** chaque noeud est soit un système d'extrémité, soit un commutateur.

**12.** Système de traitement de données selon la revendication 11, dans lequel le réseau comprend de multiples connexions d'arbre, chaque arbre étant formé d'un sous-ensemble disjoint de commutateurs, et un sous-ensemble de systèmes d'extrémité étant connecté à exactement un commutateur de chaque arbre de l'ensemble d'arbres redondants.

**13.** Système de traitement de données selon la revendication 11 ou 12, dans lequel le sous-ensemble de noeuds qui envoient des messages dans la première étape de l'approche de synchronisation d'horloge en deux étapes est un sous-ensemble des systèmes d'extrémité.

**14.** Système de traitement de données selon l'une des revendications 11 à 13, dans lequel le sous-ensemble de noeuds qui réalisent la première fonction de convergence est un sous-ensemble des commutateurs dans le réseau.

CM

CM

. . .

SM

SM

SM

SM

SM

Fig. 1

Integration Cycle

Alg. 2,3

$SM_1..SM_{|SM|}$

PCFs

Alg. 4,5

Alg. 6

$CM_1..CM_{|CM|}$

Alg. 1

Real-Time

Fig. 2

Fig. 3

Fig. 4

Fig. 5

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. KOPETZ ; G. BAUER.** The time-triggered architecture. *Proceedings of the IEEE,* January 2003, vol. 91 (1), 112-126
- **H. KOPETZ.** TTP/C Protocol. TTTech Computertechnik AG, July 2002
- **W. STEINER.** TTEthernet Specification. *TTA Group,* 2008, http://www.ttagroup.org.
- Automated formal verification of the ttethernet synchronization quality. **W. STEINER ; B. DUTERTRE.** NASA Formal Methods, ser. Lecture Notes in Computer Science. Springer, 2011, vol. 6617, 375-390
- **W. TORRES-POMALES ; M. R. MALEKPOUR ; P. MINER.** ROBUS-2: A Fault-Tolerant Broadcast Communication System. Langley Research Center, 2005
- **M. SERAFINI ; P. BOKOR ; N. SURI ; J. VINTER ; A. ADEMAJ ; W. BRANDSTÄTTER ; F. TAGLIABO ; J. KOCH.** Application-level diagnostic and membership protocols for generic time-triggered systems. *IEEE Trans. Dependable Sec. Comput.,* 2011, vol. 8 (2), 177-193
- FlexRay Communications System - Protocol Specification. *FlexRay Consortium,* 2005, http://www.flexray.com.
- **H. KOPETZ ; A. ADEMAJ ; A. HANZLIK.** Combination of clock-state and clock-rate correction in fault-tolerant distributed systems. *Real-Time Systems,* 2006, vol. 33 (1-3), 139-173
- SMT-Based formal verification of a TTEthernet synchronization function. **W. STEINER ; B. DUTERTRE.** Formal Methods for Industrial Critical Systems, ser. Lecture Notes in Computer Science. Springer-Verlag, 2010, vol. 6371, 148-163
- Tool presentation: SAL2. **L. DE MOURA ; S. OWRE ; H. RUEß ; J. RUSHBY ; N. SHANKAR ; M. SOREA ; A. TIWARI.** Computer-Aided Verification (CAV 2004). S. Verlag, 2004
- Bounded model checking and induction: From refutation to verification. **L. DE MOURA ; H. RUEß ; M. SOREA.** Computer-Aided Verification, CAV 2003, ser. Lecture Notes in Computer Science. Springer-Verlag, 2003, vol. 2725, 14-26
- Modeling and verification of a fault-tolerant real-time startup protocol using calendar automata. **B. DUTERTRE ; M. SOREA.** Proc. of FORMATS/FTRTFT, ser. Lecture Notes in Computer Science. Springer-Verlag, September 2004, vol. 3253, 199-214